# EUROPEAN PATENT SPECIFICATION

(11) **EP 0 502 246 B1**
(45) Date of publication and mention of the grant of the patent: **14.01.1998**
(21) Application number: 91117753.3
(22) Date of filing: 17.10.1991
(51) Int. Cl.: G06F 15/16, G06F 9/44, H04M 11/08

(54) **Automatic download device**
Einrichtung zur automatischen Fernladung
Dispositif de téléchargement automatique

(30) Priority: 07.03.1991 JP 69007/91
(43) Date of publication of application: 09.09.1992
(73) Proprietor: RICOS CO., LTD., Miyakojima-ku, Osaka (JP)
(72) Inventor: Tsumura, Mihoji, Miyakojima-ku, Osaka (JP); Taniguchi, Shinnosuke, Higashinari-ku, Osaka (JP)
(74) Representative: Hering, Hartmut, Dipl.-Ing.

(56) References cited:
- WO-A-90/13865
- FR-A- 2 553 786
- PATENT ABSTRACTS OF JAPAN vol. 14, no. 565 (P-1143)17 December 1990 & JP-A-22 042 294 (TSUMURA MIOJI)

## Description

The invention relates to an automatic download device in accordance with the preamble of claim 1.

Generally, in cases where use is made of data, a large number of data items are stored in a memory device in order to create a database. Data is then read from the memory device as and when required.

However, if the best use is to be made of such a database then new data must from time to time be added to the memory device and this input procedure takes time.

In this connection there is known a communication system of the kind referred to the preamble of claim 1 as taught by the document JP-A-2/242 294 of Sept. 26, 1990 whereby a center containing a variety of data such as voice or music data is connected by a communication line to a plurality of terminals such that data can be transmitted from the center to each of the terminals by way of said communication line.

An object of this invention is to automate the work of adding data to a database using the type of communication system outlined above.

According to the present invention there is provided an automatic download device as set out in claim 1.

New data is automatically added in this way to the terminal database. In order to secure the requisite data storage space, data which is only infrequently accessed is deleted from the terminal memory. Effective use is thus made of the memory capacity of the terminal memory device while at the same time automatically adding new data to the terminal database.

Preferred embodiments of the present invention are subject matter of claims 2 to 12.

### BRIEF DESCRIPTION OF THE DRAWINGS

Figure 1 is a block diagram illustrating the total configuration of a preferred embodiment.
Figure 2 is a block diagram illustrating an essential part of the preferred embodiment ; and
Figure 3 is a flow chart illustrating the operation of the preferred embodiment.

In the preferred embodiment a telephone line is used as a communication line and the data, which comprises karaoke music tune data expressed in bit signal form, is configured in tune sized units. A database containing tune data is established at the center and a special purpose database is similarly set up at the terminal. New tune data is then downloaded as appropriate from the center database by way of said telephone line to the terminal database where the data can then be read in response to requests from the terminal and reproduced by a reproduction device.

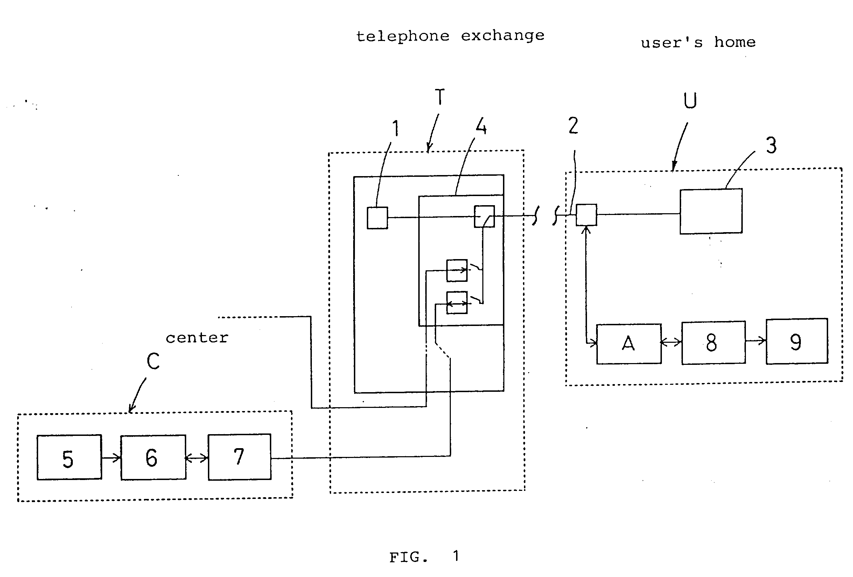

In Fig.1 T represents the telephone exchange, C represents the center and U represents a user's home in which a terminal has been installed. The telephone exchange is equipped with a switchboard 1 which is connected to the telephone receiver 3 in the user's home U via an analog telephone line 2. At the same time the center C is equipped with a memory device 5, which constitutes the tune data database, a reading device 6, which reads tune data from said memory device 5 and a modem 7, which controls connection to and disconnection from the telephone network and modulates and demodulates communication signals. The telephone exchange T is equipped with an internal exchange device 4 which selectively switches the aforementioned telephone line 2 between the switchboard 1 and the center C modem 7. The user's home U is at the same time equipped with the automatic download device A of the invention, a memory device 8, which constitutes the terminal database, and a reproduction device 9, which reads tune data from said memory device 8 on request and reproduces it in the form of karaoke music. Thus, when the telephone receiver is taken off the hook, the internal exchange device 4 is switched to the switchboard thereby making normal telephone conversation possible, and when the telephone receiver is put back on the hook, the internal exchange device 4 is switched over to the center such that tune data can then be transmitted from the center memory device 5 to the terminal memory device 8. This invention can be installed in more than one user's home at the same time and a single center can thus be accessed by more than one terminal.

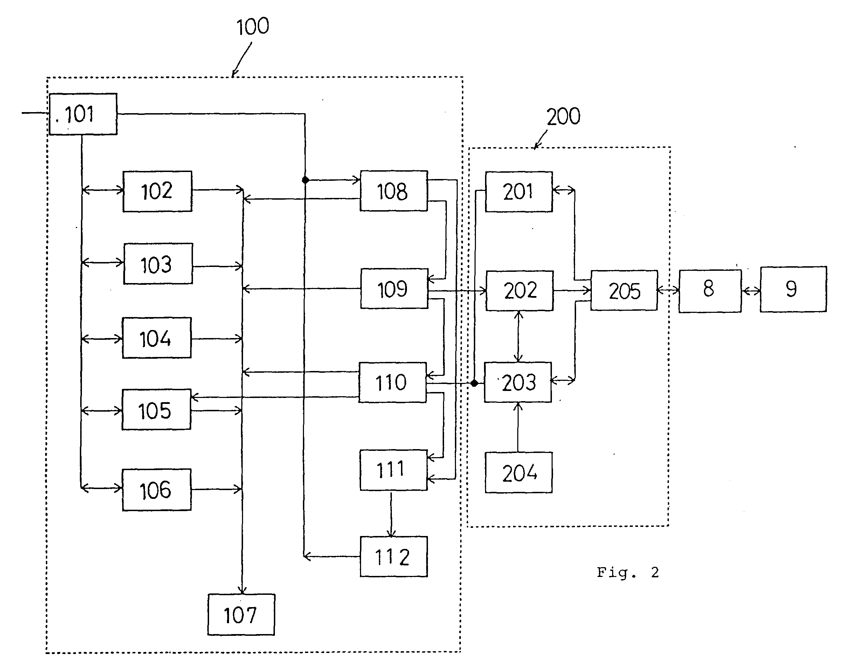

The automatic download device A will now be described by reference to Fig.2. In Fig.2, 101 is a modem which is connected to the telephone line 2 and which carries out connection to and disconnection from the telephone network, which is constituted by the telephone line 2, and modulates and demodulates communication signals. A synchronization device 102, a connection processing device 103, a connection error processing device 104, an end processing device 105 and an abnormal end processing device 106 are each connected in parallel to said modem 101 and are used to control the modem 101. In functional terms, the synchronization device 102 synchronizes the frames of an incoming signal in the form of bit signals and enables periodic communication by periodically connecting the modem 101 in accordance with an internal timer. The connection processing device 103 controls the correct connection of the modem 101. The connection error processing device 104 monitors the operation of the connection processing device 103 and, in cases where the center C is connected with another terminal, for example, or has broken down resulting in the return of a connection error status, it waits for a random period of time and then reconnects the modem 101. The end processing device 105 controls the disconnection of the modem 101 in order to end each communication operation correctly. The abnormal end processing device 106 monitors the operation of the end processing device 105 and, in cases where a disconnection error occurs, it waits for a random period of time and then disconnects the modem 101 again in order to end the communication operation correctly. The above devices are each connected to a communication status display device 107 which enables monitoring of the operating status of the modem 101.

The modem 101 is also connected to an error control device 108 which functions primarily on receipt of an incoming signal. The error control device 108 is designed to secure correct communication by detecting errors in tune data received from the center C. If, for example, data other than the required tune data were to be received by the terminal then the error control device 108 would eliminate the erroneous data. The error control device 108 is connected in turn to a command analysis device 109 which analyzes the contents of tune data received from the center C.

The modem 101 is also connected to a command creation device 110 which functions primarily during transmission operations. The command creation device 110 itself creates the contents of commands for transmission to the center C. Said command creation device 110 is further connected to a transmit frame creation device 111 which creates transmit frames from transmit signals in the form of bit signals. The transmit frame creation device 111 is in turn connected to a transmission control device 112 which switches between transmitting and receiving signals. The output signal of the aforementioned error control device is also input to the transmit frame creation device 111 in order to control errors occurring during the course of transmit frame creation. The output signal of the command analysis device 109 is at the same time input to the command creation device 110 providing data related to command conversion. The output signals of each of the error control device 108, the command analysis device 109 and the command creation device 110 are also input to the aforementioned communication status display device 107, thereby enabling the monitoring of both the transmit and the receive communication statuses. The output signal of the command creation device 110 is also input to the end processing device 105 and, in the case of a disconnection command, the modem 101 is disconnected. 202 is a data processing device with functions which include (1) The checking of tune data which is to be downloaded in order to ascertain its size and the subsequent checking of the memory device 8 in order to ascertain whether or not there is enough storage space to accommodate said tune data, (2) The deletion of tune data from the memory device 8 on the basis of frequency of access and (3) The output of requests to the center C for the transmission of tune data and the subsequent storage in the memory device 8 of the tune data transmitted in response to said requests. The data processing device 202 is in turn connected to a disk input/output device 205 which writes tune data to and reads tune data from the memory device 8. The memory device 8 itself not only stores tune data but also holds a record of tune names in order to facilitate the control of tune data. Each tune name record consists of the number of the tune, the name of the tune, the name of the data file which contains the tune data, the size of the data, the data attributes, the data hold time, data use frequency 1 and data use frequency 2. The tune numbers (symbols) are assigned tune by tune on a 1:1 basis. The tune names consist of the titles of the tunes represented either in kanji or in alphanumeric form. The data size represents the amount of memory space occupied by the tune data. The data attributes take the form of flags which indicate whether deletion of the tune data to which they relate is inhibited or not. Said flags are normally set to enable deletion. The data hold time indicates the period of time during which the deletion of a given piece of data is prohibited and is set to its initial value on download. Data use frequency 1 indicates the number of times that tune data has been read during its use frequency measurement period. Data use frequency 2 indicates the number of times that tune data has been read during the previous frequency measurement period. 201 is a remaining disk space monitoring device which is connected to the disk input/output device 205 and which is used to monitor the amount of memory space remaining in the memory device 8. The output signal from the remaining disk space monitoring device 201 is input to the aforementioned command creation device 110. 203 is a tune name control device which is also connected to the disk input/output device 205 and which receives signals output by a request input unit 204. Functions of the tune name control device 203 include (1) The issuance of instructions to the center C to download new tune data, the comparison of such new tune data downloaded from the center C with the tune name record read from the memory device 8 and the subsequent selection of tunes which need to be downloaded (2) Input to the memory device 8 of the download request list created by the request input unit 204 and (3) Addition to the tune name record of tune data which is not already recorded there. New tune data comprises such items as the tune number, the tune name, the size of the data and the data file name of the tune data in question. The output signal of the tune name control device 203 is input to the aforementioned command creation device 110. At the same time the above mentioned request input unit 204 enables the manual input not only of the instruction to create a download request list but also of instructions to change the interval time of the periodic communication operation, to change the data use frequency measurement time, to change data attributes, to change the initial data hold time value and to delete tune data.

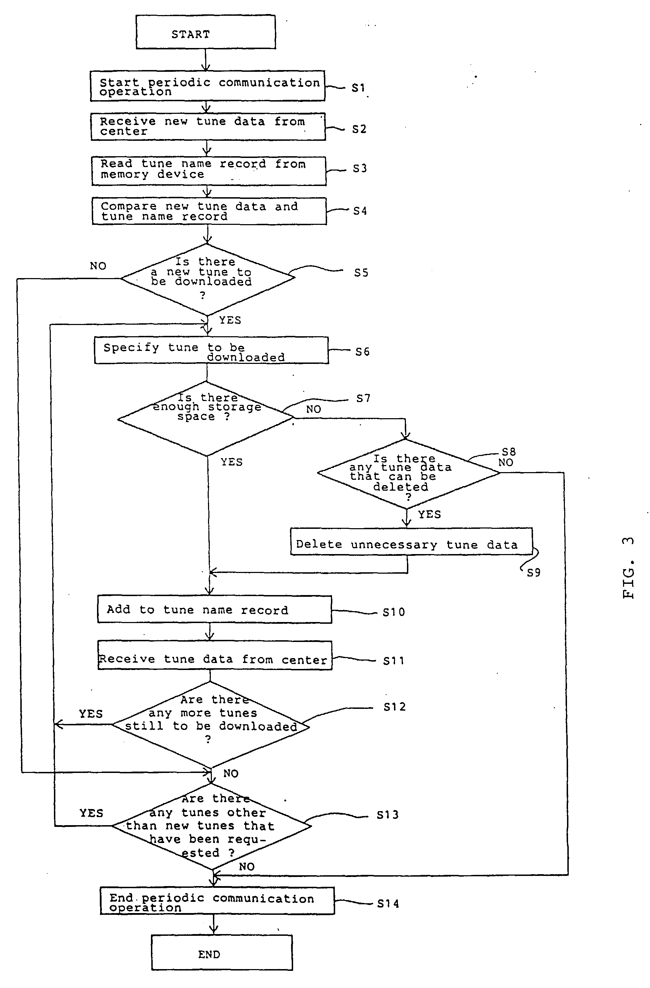

There now follows a description of the operation of the automatic download device A by reference to the flow chart shown in Fig.3. First, at step S1 the periodic communication operation is initiated by connecting the modem 101 in accordance with the timer of the synchronization device 102. In the event that this connection fails then the connection error processing device 104 will attempt to connect the modem 101 again. At step S2 new tune data sent from the center C is accepted in response to an instruction from the tune name control device 203. At step S3 the tune name record is read from the memory device 8. At step S4 the tune name control device 203 compares the new tune data and the tune name record and at step S5 it is determined whether or not it is necessary to download one or more new tunes. In other words, it is determined whether or not there is a "new tune in the new tune data which is not recorded in the tune name record". In cases where there are no new tunes in the center data then download is not necessary and the procedure passes straight to step S13 in the flow chart. However, in cases where there are new tunes to be downloaded then the procedure passes on instead to step S6 at which point one of the new tunes to be downloaded is specified. Next, at step S7 the data processing device 202 checks the data size of the new tune which has been specified for download and then determines whether or not there is sufficient space in the memory device 8 to store said new tune data. In cases where there is sufficient memory space available then the procedure passes straight on to step S10 in order to prepare for download. In cases where there is insufficient memory space available, however, the procedure moves on to step S8 where the tune name record file in the memory device 8 is accessed in order to determine whether or not there is tune data held in memory with such data attributes and data hold time as would permit its deletion. In cases where the memory contains a large volume of data the deletion of which is inhibited, then the procedure passes directly forward to step S14 at which the modem 101 is disconnected and the periodic communication operation is brought to an end.

Where, on the other hand, it is determined at step S8 that there is deletable tune data in memory then the procedure passes on to step S9 where the data processing device 202 deletes said deletable tune data after which the procedure passes on to step S10 to prepare for download. In the above case, deletion of data from such tune data as has been identified at step S9 as deletable proceeds by giving priority to the deletion of that part of the data which is read less frequently as indicated by the assignment of data use frequency 2. As a consequence of the adoption of this procedure, the tune data which is read more frequently is left in memory.

At step S10 the tune name control device 203 adds data to the tune name record in respect of the new tune which is to be downloaded. At step S11 the data processing device 202 issues a request to the center C for the transmission of the tune data and the tune data which is subsequently transmitted is stored in the memory device 8. Next, at step S12 it is determined whether or not any new tunes remain to be downloaded and, if such new tunes in fact remain, then the procedure returns to step S6 and the processing steps from step S6 to step S12 are repeated. If, on the other hand, no new tunes remain to be downloaded then the procedure moves on to step S13 where the tune name control device 203 determines whether or not there are any tunes which have been requested which are other than new tunes or, in other words, tunes which are not included in the new tune data but which are included in the download request list. In cases where there are such tunes requested then the procedure returns to step S6 and the processing steps from step S6 to step S12 are repeated. In case where there are no such tunes then the procedure moves on to step S14 where the modem 101 is disconnected and the periodic communication operation is brought to an end.

The configuration described above comprises a communication means 100 which in turn comprises a modem 101, a synchronization device 102, a connection processing device 103, a connection error processing device 104, an end processing device 105 and an abnormal end processing device 106, a communication status display device 107, an error control device 108, a command analysis device 109, a command creation device 110, a transmit frame creation device 111 and a transmission control device 112, and which communicates periodically with the center C. The configuration described above further comprises a download control means 200 which in turn comprises a remaining disk space monitoring device 201, a data processing device 202, a tune name control device 203, a request input unit 204 and a disk input/output device 205, and which connects with said communication means 100 and with the terminal memory device 8 and which, on finding new data in the center memory device 5 during the course of periodic communication, checks that there is sufficient space in the terminal memory device 8 for the storage of said new data while at the same time reading said new data from the center memory device 5 and storing it in said terminal memory device 8.

Thus, in the preferred embodiment described above, the communication means 100 communicates periodically with the center C and if, during the course of such periodic communication, new tune data is discovered in the center memory device 5, then the download control means 200 checks that there is enough space in the terminal memory device 8 to store new data while at the same time reading said new tune data from the center memory device 5 and storing it in the terminal memory device 8, thereby automatically adding new tune data to the terminal database.

Furthermore, since the download control means secures data storage space in memory by deleting the tune data which is least frequently accessed, this enables the most effective use of the memory capacity of the terminal memory device 8. The tune data itself can be configured as MIDI data, for example. In this sort of case the reproduction device would be a MIDI sound source reproduction device.

Although the download object in the preferred embodiment described above is karaoke music data expressed in terms of bit signals and assembled in tune sized units, this need not be the case. The download object can, in fact, be any of the types of data stored in an ordinary memory device.

Moreover, although communication in the preferred embodiment described above is achieved by means of a single telephone line 2 which is switched either to the telephone receiver 3 for conversational use or to the terminal for communication use, this need not be the case. The terminal can equally be fitted with its own dedicated telephone line.

It is also the case that the invention need not be restricted to downloading by way of an analog telephone line as in the preferred embodiment described above. Downloading can, of course, equally be carried out by way of a digital telephone line or indeed by way of any of many different kinds of communication lines.

## Claims

1. An automatic download device comprising a communication means (100) which is incorporated into a terminal and which communicates periodically with a center (C) comprising a center memory device (5) by means of a communication line (2), and a download control means (200) which is connected to said communication means (100) and to a memory device (8) of said terminal (U) **characterized in that,** when said terminal (U) receives an indication from the center (C) that there is new data in said center memory device (5), said terminal (U) secures space in said terminal memory device (8) for storage of said new data while at the same time reading said new data out of said center memory device (5) and storing it in said terminal memory device (8).

2. An automatic download device according to claim 1 wherein the securing of data storage space in said download control means (200) is achieved by the deletion of data which is accessed only infrequently.

3. An automatic download device according to claim 1 or claim 2 wherein said center (C) is equipped with a center memory device (5) and with a reading device (6), which reads data from said center memory device (5), and with a center modem (7) which carries out connection and disconnection with a telephone network (2) and which carries out modulation and demodulation operations, and wherein said communication means (100) comprises a terminal modem (101), which is connected to said center modem (7) by a telephone line (2).

4. An automatic download device according to claim 3 wherein said communication means (100) comprises a synchronization device (102) which synchronizes with the frames of an incoming signal while at the same time periodically connecting said terminal modem (101) in accordance with an internal timer in order to establish periodic communication.

5. An automatic download device according to claim 3 or claim 4 wherein said communication means (100) further comprises an error processing device (104) which, in the event of an abnormal connection or disconnection of the terminal modem (101), waits for a random period of time and then reconnects or disconnects said terminal modem (101).

6. An automatic download device according to anyone of claims 3 to 5 wherein said communication means (100) further comprises an error control device (108) which detects errors in data received from said center (C) for the purpose of securing correct communications.

7. An automatic download device according to anyone of claims 3 to 6 wherein said download control means (200) comprises a tune name control device (203) which compares data received from said center (C) with data stored in said terminal memory device (8) and selects such data as needs to be downloaded.

8. An automatic download device according to anyone of claims 3 to 7 wherein said download control means (200) further comprises a data processing device (202) which checks the size of download data and then checks whether or not there is sufficient space in the terminal memory device (8) to store said download data.

9. An automatic download device according to claim 8 wherein said data processing device (202) deletes data held in the terminal memory device (8) in priority order starting with the data which is least frequently accessed.

10. An automatic download device according to claim 9 wherein each item of data is allocated its own hold time during which deletion is inhibited.

11. An automatic download device according to anyone of the preceding claims wherein said data comprises tune data in the form of bit signals assembled in tune sized units.

12. An automatic download device according to claim 11 wherein said music consists of karaoke music and said tune data is created in conformity with the MIDI standard.

## Patentansprüche

1. Vorrichtung zum automatischen Herunterladen, die folgendes aufweist: eine Kommunikationseinrichtung (100), die in ein Terminal eingebaut ist und die periodisch mit einem Zentrum (C) mit einer Zentrums-Speichervorrichtung (5) mittels einer Kommunikationsleitung (2) kommuniziert, und eine Einrichtung (200) zum Steuern eines Herunterladens, die mit der Kommunikationseinrichtung (100) und mit einer Speichervorrichtung (8) des Terminals (U) verbunden ist, dadurch gekennzeichnet, daß dann, wenn das Terminal (U) einen Hinweis vom Zentrum (C) empfängt, daß es neue Daten in der Zentrums-Speichervorrichtung (5) gibt, das Terminal (U) Platz in der Terminal-Speichervorrichtung (8) zur Speicherung der neuen Daten sichert, während es gleichzeitig die neuen Daten aus der Zentrums-Speichervorrichtung (5) liest und sie in der Terminal-Speichervorrichtung (8) speichert.

2. Vorrichtung zum automatischen Herunterladen nach Anspruch 1, wobei das Sichern des Datenspeicherplatzes in der Einrichtung (200) zum Steuern eines Herunterladens durch das Löschen von Daten erreicht wird, auf die nur wenig häufig zugegriffen wird.

3. Vorrichtung zum automatischen Herunterladen nach Anspruch 1 oder 2, wobei das Zentrum (C) mit einer Zentrums-Speichervorrichtung (5) und mit einer Lesevorrichtung (6) ausgestattet ist, die Daten aus der Zentrums-Speichervorrichtung (5) liest, und mit einem Zentrums-Modem (7), das eine Verbindung mit und eine Trennung von einem Telefonnetz (2) ausführt und das Modulations- und Demodulationsoperationen ausführt, und wobei die Kommunikationseinrichtung (100) ein Terminal-Modem (101) aufweist, das mit dem Zentrums-Modem (7) durch eine Telefonleitung (2) verbunden ist.

4. Vorrichtung zum automatischen Herunterladen nach Anspruch 3, wobei die Kommunikationseinrichtung (100) eine Synchronisationsvorrichtung (102) aufweist, die eine Synchronisation mit den Frames eines ankommenden Signals durchführt, während sie gleichzeitig das Terminal-Modem (101) gemäß einem internen Zeitgeber periodisch verbindet, um eine periodische Kommunikation aufzubauen.

5. Vorrichtung zum automatischen Herunterladen nach Anspruch 3 oder 4, wobei die Kommunikationseinrichtung (100) weiterhin eine Fehler-Verarbeitungsvorrichtung (104) aufweist, die im Falle einer anormalen Verbindung oder Trennung des Terminal-Modems (101) auf eine Zufalls-Zeitperiode wartet und dann das Terminal-Modem (101) erneut verbindet oder trennt.

6. Vorrichtung zum automatischen Herunterladen nach einem der Ansprüche 3 bis 5, wobei die Kommunikationseinrichtung (100) weiterhin eine Fehler-Steuervorrichtung (108) aufweist, die Fehler in Daten erfaßt, die vom Zentrum (C) empfangen werden, zum Zwecke eines Sicherstellens richtiger Kommunikationen.

7. Vorrichtung zum automatischen Herunterladen nach einem der Ansprüche 3 bis 6, wobei die Einrichtung (200) zum Steuern eines Herunterladens eine Melodienamen-Steuervorrichtung (203) aufweist, die vom Zentrum (C) empfangene Daten mit in der Terminal-Speichervorrichtung (8) gespeicherten Daten vergleicht und, wenn es nötig ist, solche Daten auswählt, damit sie heruntergeladen werden.

8. Vorrichtung zum automatischen nach einem der Ansprüche 3 bis 7, wobei die Einrichtung (200) zum Steuern eines Herunterladens weiterhin eine Datenverarbeitungsvorrichtung (202) aufweist, die die Größe von heruntergeladenen Daten prüft und dann prüft, ob es genügend Platz in der Terminal-Speichervorrichtung (8) zum Speichern der heruntergeladenen Daten gibt oder nicht.

9. Vorrichtung zum automatischen Herunterladen nach Anspruch 8, wobei die Datenverarbeitungsvorrichtung (202) Daten, die in der Terminal-Speichervorrichtung (8) gehalten sind, in einer Prioritätsreihenfolge beginnend mit den Daten löscht, auf die am wenigsten häufig zugegriffen wird.

10. Vorrichtung zum automatischen Herunterladen nach Anspruch 9, wobei jedem Datenelement seine eigene Haltezeit zugeordnet ist, während welcher ein Löschen verboten ist.

11. Vorrichtung zum automatischen Herunterladen nach einem der vorangehenden Ansprüche, wobei die Daten Melodiedaten in der Form von Bit-Signalen sind, die in gemäß der Melodie bemaßten Einheiten angeordnet sind.

12. Vorrichtung zum automatischen Herunterladen nach Anspruch 11, wobei die Musik aus Karaoke-Musik besteht und die Melodiedaten in Übereinstimmung mit dem MIDI-Standard erzeugt werden.

## Revendications

1. Dispositif de téléchargement automatique comportant des moyens de communication (100) qui sont incorporés dans un terminal et qui communiquent périodiquement par l'intermédiaire d'une ligne de communication (2) avec un central (C) comportant un dispositif de mémorisation de central (5), et des moyens de commande de téléchargement (200) qui sont connectés auxdits moyens de communication (100) et à un dispositif de mémorisation (8) dudit terminal (U) caractérisé en ce que, lorsque ledit terminal (U) reçoit une indication provenant du central (C) qu'il existe de nouvelles données dans ledit dispositif de mémorisation de central (5), ledit terminal (U) assure un espace dans ledit dispositif de mémorisation de central (8) pour mémoriser lesdites nouvelles données tout en lisant en même temps lesdites nouvelles données dudit dispositif de mémorisation de central (5) et tout en les mémorisant dans ledit dispositif de mémorisation de terminal (8).

2. Dispositif de téléchargement automatique selon la revendication 1, dans lequel on assure un espace mémoire de données dans lesdits moyens de commande de téléchargement (200) en effaçant des données dont on a accès uniquement de manière rare.

3. Dispositif de téléchargement automatique selon la revendication 1 ou 2, dans lequel ledit central (C) est équipé d'un dispositif de mémorisation de central (5) et d'un dispositif de lecture (6), qui lit des données provenant dudit dispositif de mémorisation de central (5), et d'un modem de central (7) qui effectue une connexion et une déconnexion avec un réseau téléphonique (2) et qui effectue des opérations de modulation et de démodulation, et lesdits moyens de communication (100) comportant un modem de terminal (101), qui est connecté audit modem de central (7) par une ligne téléphonique (2).

4. Dispositif de téléchargement automatique selon la revendication 3, dans lequel lesdits moyens de communication (100) comportent un dispositif de synchronisation (102) qui synchronise les trames d'un signal entrant tout en connectant périodiquement en même temps ledit modem de terminal (101) conformément à une minuterie interne dans le but d'établir une communication périodique.

5. Dispositif de téléchargement automatique selon la revendication 3 ou 4, dans lequel lesdits moyens de communication (100) comportent de plus un dispositif de traitement d'erreur (104) qui, dans le cas d'une connexion ou d'une déconnexion anormale du modem de terminal (101), attend pendant une période de temps aléatoire et ensuite reconnecte ou déconnecte ledit modem de terminal (101).

6. Dispositif de téléchargement automatique selon l'une quelconque des revendications 3 à 5, dans lequel lesdits moyens de communication (100) comportent de plus un dispositif de commande d'erreurs (108) qui détecte des erreurs dans des données reçues à partir dudit central (C) dans le but d'assurer des communications correctes.

7. Dispositif de téléchargement automatique selon l'une quelconque des revendications 3 à 6, dans lequel lesdits moyens de commande de téléchargement (200) comportent un dispositif de commande de noms de mélodie (203) qui compare des données reçues à partir dudit central (C) aux données mémorisées dans ledit dispositif de mémorisation de terminal (8) et sélectionne les données à télécharger.

8. Dispositif de téléchargement automatique selon l'une quelconque des revendications 3 à 7, dans lequel lesdits moyens de commande de téléchargement (200) comportent de plus un dispositif de traitement de données (202) qui contrôle la dimension des données téléchargées et qui contrôle ensuite si oui ou non il y a un espace suffisant dans le dispositif de mémorisation de terminal (8) pour mémoriser lesdites données de téléchargement.

9. Dispositif de téléchargement automatique selon la revendication 8, dans lequel ledit dispositif de traitement de données (202) efface des données maintenues dans le dispositif de mémorisation de terminal (8) en priorité dans l'ordre démarrant par les données dont on a le moins fréquemment accès.

10. Dispositif de téléchargement automatique selon la revendication 9, dans lequel on attribue à chaque élément de données son propre temps de maintien pendant lequel l'effacement est interdit.

11. Dispositif de téléchargement automatique selon l'une quelconque des revendications précédentes, dans lequel lesdites données comportent des données de mélodie sous la forme de signaux binaires, assemblées en unités de mélodie dimensionnées.

12. Dispositif de téléchargement automatique selon la revendication 11, dans lequel ladite musique est constituée d'une musique de karaoké et lesdites données de mélodie sont créées conformément au standard MIDI.
